# EUROPEAN PATENT SPECIFICATION

(11) **EP 4 308 999 B1**
(45) Date of publication and mention of the grant of the patent: **26.08.2026**
(21) Application number: 22772021.6
(22) Date of filing: 15.03.2022
(51) Int. Cl.: G02F 1/167, G02F 1/1681, G02B 26/02, G02B 27/01, E06B 9/24, E06B 3/67

(54) **SWITCHABLE LIGHT MODULATOR HAVING REGIONS OF VARYING OPACITY**
SCHALTBARER LICHTMODULATOR MIT BEREICHEN UNTERSCHIEDLICHER OPAZITÄT
MODULATEUR DE LUMIÈRE COMMUTABLE AYANT DES RÉGIONS D'OPACITÉ VARIABLE

(30) Priority: 15.03.2021 US 202163161432 P
(43) Date of publication of application: 24.01.2024
(73) Proprietor: E Ink Corporation, Billerica, Massachusetts 01821-4165 (US)
(72) Inventor: O'KEEFFE, Donal Martin, Billerica, Massachusetts 01821-4165 (US)
(74) Representative: Cobbold, Alistair John
(86) International application number: PCT/US2022/020310
(87) International publication number: WO 2022/197654

(56) References cited:
- WO-A1-00/77570
- CN-A- 112 305 765
- JP-A- 2007 248 932
- US-A1- 2011 102 881
- US-A1- 2011 133 627
- US-A1- 2012 306 940
- US-A1- 2018 129 080
- US-A1- 2018 364 542
- US-A1- 2019 100 853
- US-A1- 2019 339 563
- US-A1- 2021 072 578

## Description

### RELATED APPLICATIONS

This application claims priority to U.S. Provisional Patent Application No. 63/161,432, filed March 15, 2021.

### FIELD OF THE INVENTION

This invention relates to switchable light modulating devices, that is to say, to variable transmission film devices designed to modulate the amount of light or other electro-magnetic radiation passing there through. Several different types of electronically-actuable light-modulating devices, such as electrochromic devices, suspended particle display (SPD) devices, and electrophoretic devices, are commercially-available, and have various costs and benefits, such as energy consumption, contrast ratio, and clarity of the transparent, i.e., "open" state. [For convenience, the term "light" will normally be used herein, but this term should be understood in a broad sense to include electro-magnetic radiation at both visible and non-visible wavelengths. For example, as mentioned below, the invention may be applied substrates to provide surfaces can modulate infrared radiation for controlling temperature, or for blocking exposure to external infrared radiation.]

More specifically, this invention relates to switchable light modulating devices that use electro-optic materials, such as particle-based electrophoretic media, to control light modulation over only a portion of the viewing medium. Such devices may be beneficial where it is desired to diminish light transmission in only a specific predetermined region of the viewing plane in order to block incoming light, or to provide a darkened background upon which to project an image. Examples of electrophoretic media that may be incorporated into various embodiments of the present invention include, for example, the electrophoretic media described in U.S. Patent Nos. 10,809,590 and 10,983,410.

### SUMMARY OF THE INVENTION

Embodiments of the present invention provide a switchable light modulator device with an electro-optical fluid layer disposed between the surfaces of two, parallel, juxtaposed substrates. The opposite surfaces of the substrates form the viewing faces of the embodiments. The coverage of the viewing area (of the viewing faces) of embodiments by the electro-optical fluid layer is not uniform resulting in different levels of light regulation for different areas in accordance with step changes in the fluid layer. In an embodiment, the step changes in the fluid layer between the different areas are achieved by step changes in the volume of embossed (or moulded) transparent polymer structure. The embossed solid polymer structure is embedded in the viewing area, and also incorporates a wall feature that divides the device's fluid layer into a monolayer of discrete volumes corresponding to cavities. Within these cavities the embossed polymer structure accomplishes a step change in the fluid layer with respect to an adjacent area or cavity by changing the percentage of volume occupied by solid, transparent polymer, and by association, the percentage of volume of the fluid. In another embodiment, the volumes of the cavities can be altered by reducing the open width of the cavities such that some cavities only include thin areas of separation (i.e., walls) between the cavities, wherein in other areas the cavities have much thicker separations.

A cavity's volume is defined by the inside surface of its wall structure and the inner surfaces of its juxtaposed substrates. There are two extreme or limiting areas, one is where a cavity's volume is filled with fluid only (100% fluid), and the other is where a cavity's volume is solid polymer only (0% fluid). In the latter area the light modulator cannot regulate light transmission even though the area may be in a central viewing area. However, for convenience and simplicity of operation, all of these disparate cavities may be assembled from only two substrates, and the final display only includes a top and a bottom electrode layer, preferably constructed from a light transmissive material, such as indium-tin-oxide (ITO). In some embodiments most cavities will be intermediate the two extremes. Accordingly, some cavities may have a volume X, some cavities have a volume between 2X and 3X, and some other cavities will have a volume of at least 3X. X may be approximately 1 nL, but it also may be larger, such as between 1 and 10 nL, or smaller, such as between 0.1 and 1 nL. In other embodiments no cavities in the viewing area will have 0% fluid by volume. In embodiments the percentage volume, step change of the fluid layer between at least two or more adjacent cavities that each contain fluid is at least 1%, more preferably at least 1.5%, and most preferably at least 1.75%, and the percentage volume, step change of the fluid layer between at least two or more neighboring cavities that each contain fluid is at least 10%, more preferably at least 15%, and most preferably at least 17.5%. For the avoidance of doubt, neighboring cavities refer to any two cavities in the viewing area of the light modulator and neighboring areas refer to any two areas where each area comprises a multiple of cavities that each have the same percentage volume of fluid but the percentage value for the two areas is different.

In embodiments the percentage volume, step change of the fluid layer coincides with a step change in the range of selectable light transmission for a cavity, and by extension for an area (having cavities with the same percentage volume of fluid). As before, there are two extreme or limiting cases, one is where a cavity's volume is filled with fluid only (100% fluid), the embodiment's range of switchable (i.e. selectable) light transmission in this case is from the lowest minimum transmission value that the light modulator can achieve for any cavity to the lowest maximum transmission value. At the other extreme, a cavity at or close to 0% volume for the fluid will have the modulator's maximum transmission value but negligible switching range with a minimum transmission value indistinguishable by eye from its maximum.

In embodiments light states are selectable and a first light state corresponds to a cavity's maximum light transmission and a second light state, its minimum transmission. Devices are characterized by cavities, and by extension areas, having differences in the light transmission value for each of the first and second light states. At least two or more adjacent cavities, each containing fluid, operated in the same light state have a difference of light transmission value of at least 1%, more preferably at least 1.5%, and most preferably at least 1.75%, and the difference between at least two or more neighboring cavities that each contain fluid is at least 10%, more preferably at least 15%, and most preferably at least 17.5%.

In some embodiments the same fluid fills at least 66% of cavities (though not with the same percentage volume), and more preferable the same fluid fills 100% of cavities that have fluid. In some embodiments the fluid fills the cavities in a laminating step that applies the embossed polymer structure previously formed on (and bonded to) the bottom substrate to the top substrate with the fluid layer between. Preferably the laminating step uses a pair of NIP rollers orientated so that the substrates travel vertically between the rollers and the fluid is held in a lake between the substrates above the NIP point and filled and laminated by the rollers into the cavities in the embossed polymer as the substrates pass the NIP point. The orthogonal distance between the parallel faces of the substrates is determined by the polymer wall structures as the substrates pass the NIP point. Preferably the tops of the polymer wall structures are bonded to the top substrate in a UV light (or other radiation) cure stage after or contemporaneously with laminating.

The invention is set out in the claims. In one aspect, in accordance with claim 1, a switchable light modulator is described herein, inter alia including a first light-transmissive substrate, a second light-transmissive substrate comprising a plurality of features, the features being substantially parallel to the first light-transmissive substrate, and at least some of the features having different orthogonal distances between the features and the first light-transmissive substrate, a plurality of walls disposed between the first light-transmissive substrate and the second light-transmissive substrate, thus creating a plurality of chambers, an electro-optic medium disposed within the plurality of chambers, a first electrode coupled to the first light-transmissive substrate, and a second electrode coupled to the second light-transmissive substrate, wherein application of a driving voltage between the first and second electrodes causes the electro-optic medium to switch between a first light-absorbing state and a second light-transmissive state. In some embodiments, the electro-optic medium comprises charged pigment particles dispersed in a non-polar solvent and the electro-optic medium switches between a first light-absorbing state and a second light-transmissive state by moving between a distributed particle state and an assembled particle state. In some embodiments, the electro-optic medium is bistable. In some embodiments, the first light transmissive substrate or the second light transmissive substrate comprise polymers including acrylate, methacrylate, vinylbenzene, vinylether, or multifunctional epoxides. In some embodiments, at least a portion of the second light-transmissive substrate contacts the first light-transmissive substrate. In some embodiments, the orthogonal distance between at least some of the features of the second light-transmissive substrate and the first light-transmissive substrate is at least 60 µm or greater. In some embodiments, the orthogonal distance between at least some of the features of the second light-transmissive substrate and the first light-transmissive substrate is less than 60 µm. Such switchable light modulators can be incorporated into a windshield, window, glasses, googles, or visor. Such switchable light modulators can be incorporated into an information display system comprising a transparent substrate, the switchable light modulator, and a projector configured to project information on the switchable light modulator. In some embodiments, the projector is a near-to-eye projector.

In another aspect, in accordance with claim 11, a switchable light modulator is described herein, inter alia including a first light-transmissive substrate, a second light-transmissive substrate comprising a plurality of wells, the wells having walls and a floor and creating a plurality of chambers when coupled to the first light-transmissive substrate, wherein the wells have an open width, and at least some of the wells have an open width that is less than half as wide as other wells, an electro-optic medium disposed within the plurality of chambers, a first electrode coupled to the first light-transmissive substrate, and a second electrode coupled to the second light-transmissive substrate, wherein application of a driving voltage between the first and second electrodes causes the electro-optic medium to switch between a first light-absorbing state and a second light-transmissive state. In some embodiments, the electro-optic medium comprises charged pigment particles dispersed in a non-polar solvent and the electro-optic medium switches between a first light-absorbing state and a second light-transmissive state by moving between a distributed particle state and an assembled particle state. In some embodiments, the electro-optic medium is bistable. In some embodiments, the first light transmissive substrate or the second light transmissive substrate comprise polymers including acrylate, methacrylate, vinylbenzene, vinylether, or multifunctional epoxides. In accordance with claim 11, at least a portion of the second light-transmissive substrate contacts the first light-transmissive substrate. In some embodiments, the open width of at least some of the wells is 150 µm or greater. In some embodiments, the open width of at least some of the wells is less than 150 µm. Such switchable light modulators can be incorporated into a windshield, window, glasses, googles, or visor. Such switchable light modulators can be incorporated into an information display system comprising a transparent substrate, the switchable light modulator, and a projector configured to project information on the switchable light modulator. In some embodiments, the projector is a near-to-eye projector.

These and other aspects of the present invention will be apparent in view of the following description.

### BRIEF DESCRIPTION OF THE DRAWINGS

Figures 1A and 1B show front (outside) and back (inside) views of exemplary augmented reality glasses, including short-throw/near-to-eye projectors to display information directly on the interior plane of the viewing lenses.
Figures 2A and 2B show outside and inside views of an exemplary vehicle windscreen (in this instance an airliner) including short-throw projectors to display information directly on the interior plane of the windscreen.
Figure 3 shows an augmented reality glasses embodiment 101 having a left light modulating film 10 and right modulating film 20 in the shape of lenses for augmented reality glasses.
Figure 4A shows a magnified view of a circular cut-out or section through a first embodiment of a switchable light modulator embodiment.
Figure 4B shows a cross-section taken from the line AA in Figure 4A, and detailing chambers having different depths, and accordingly different volumes.
Figures 5A and 5B show a magnified view of a circular cut-out or section through a second embodiment of a light-modulating film embodiment where the open width of the chambers is varied to provide differing volumes of electro-optic media.
Figures 6A and 6B illustrate an embossing process to create switchable light modulators. In some embodiments, the embossed structures are thermally cured or photocured.
Figure 7 illustrates a method for assembling switchable light modulators with top and bottom transparent electrodes.
Figures 8A and 8B illustrate individual light-modulating cavities in darkened (8A) and light (8B) states.

The drawings depict one or more implementations in accord with the present concepts, by way of example only, not by way of limitations.

### DETAILED DESCRIPTION

Switchable light modulators are detailed herein, which may be films, but may also be incorporated directly into a viewing substrate, such as a window, windshield, or glasses. The switchable light modulators include many chambers filled with electro-optic media, such as electrophoretic media, wherein some chambers have a different volume of electro-optic media such that when all of the electro-optic media of the light modulator is switched between an "open" and "closed" state, some regions of the light modulator, i.e., the regions having chambers of greater volume, undergo a greater change in optical density as compared to other regions, i.e., regions having chambers with smaller volumes. Because the design only requires two (typically light-transmissive) electrodes, operation is simplified and costs are reduced, as compared to individually-actuable pixel electrodes. The light modulators described herein change one or more of light attenuation, color, specular transmittance, or diffuse reflection in response to electrical signals and switches to provide two or more light states. Preferably, light states include one extreme state (a first light state) that is transparent to visible light and another (a second light state) that strongly attenuates light. Such switchable light modulators are useful for incorporation into windshields, glasses, windows, lenses, or visors where it is desirable that only part of the viewing area is darkened.

The devices described herein may be used with any electro-optic medium whereby the transmission of the medium can be altered with the application of an electric field (i.e., a driving voltage) across the medium. Such electro-optic media may include electrochromic media, liquid crystal media, suspended particles that rotate (SPD), or electrophoretic media whereby charged particles translate toward or away from a particular electrode in order to change an optical state. Electrophoretic media are particularly favored, and when incorporated into displays, the resulting displays can have attributes of good brightness and contrast, wide viewing angles, state bistability, and low power consumption when compared with other electro-optic media, such as liquid crystal displays.

The terms "bistable" and "bistability" are used herein in their conventional meaning in the art to refer to displays comprising display elements having first and second display states differing in at least one optical property, and such that after any given element has been driven, by means of an addressing pulse of finite duration, to assume either its first or second display state, after the addressing pulse has terminated, that state will persist for at least several times, for example at least four times, the minimum duration of the addressing pulse required to change the state of the display element. It is shown in published U.S. Patent. No. 7,170,670 that some particle-based electrophoretic displays capable of gray scale are stable not only in their extreme black and white states but also in their intermediate gray states, and the same is true of some other types of electro-optic displays. This type of display is properly called "multi-stable" rather than bistable, although for convenience the term "bistable" may be used herein to cover both bistable and multi-stable displays.

Numerous patents and applications assigned to or in the names of the Massachusetts Institute of Technology (MIT), E Ink Corporation, E Ink California, LLC and related companies describe various technologies used in encapsulated and microcell electrophoretic and other electro-optic media. Encapsulated electrophoretic media comprise numerous small capsules, each of which itself comprises an internal phase containing electrophoretically-mobile particles in a fluid medium, and a capsule wall surrounding the internal phase. Typically, the capsules are themselves held within a polymeric binder to form a coherent layer positioned between two electrodes. In a microcell electrophoretic display, the charged particles and the fluid are not encapsulated within microcapsules but instead are retained within a plurality of cavities formed within a carrier medium, typically a polymeric film. The technologies described in these patents and applications include:
(a) Electrophoretic particles, fluids and fluid additives; see for example U.S. Patent Nos. 7,002,728 and 7,679,814;
(b) Capsules, binders and encapsulation processes; see for example U.S. Patent Nos. 6,922,276 and 7,411,719;
(c) Microcell structures, wall materials, and methods of forming microcells; see for example United States Patent Nos. 7,072,095 and 9,279,906;
(d) Methods for filling and sealing microcells; see for example United States Patent Nos. 7,144,942 and 7,715,088;
(e) Films and sub-assemblies containing electro-optic materials; see for example U.S. Patent Nos. 6,982,178 and 7,839,564;
(f) Backplanes, adhesive layers and other auxiliary layers and methods used in displays; see for example U.S. Patent Nos. 7,116,318 and 7,535,624;
(g) Color formation and color adjustment; see for example U.S. Patent Nos. 7,075,502 and 7,839,564;
(h) Methods for driving displays; see for example U.S. Patent Nos. 7,012,600 and 7,453,445;
(i) Applications of displays; see for example U.S. Patent Nos. 7,312,784 and 8,009,348; and
(j) Non-electrophoretic displays, as described in U.S. Patent No. 6,241,921 and U.S. Patent Applications Publication No. 2015/0277160; and applications of encapsulation and microcell technology other than displays; see for example U.S. Patent Application Publications Nos. 2015/0005720 and 2016/0012710.

A related type of electrophoretic display is a so-called "microcell electrophoretic display". In a microcell electrophoretic display, the charged particles and the suspending fluid are not encapsulated within microcapsules but instead are retained within a plurality of cavities formed within a carrier medium, typically a polymeric film. See, for example, International Application Publication No. WO 02/01281, and published U.S. Patent No. 6,788,449, both assigned to Sipix Imaging, Inc, now E Ink California, LLC.

Electrophoretic media are often opaque (since, for example, in many electrophoretic media, the particles substantially block transmission of visible light through the display) and operate in a reflective mode. However, electrophoretic devices can also be made to operate in a so-called "shutter mode," in which one display state is substantially opaque and one is light-transmissive. See, for example, the aforementioned U.S. Pat. Nos. 6,130,774 and 6,172,798, and U.S. Pat. Nos. 5,872,552; 6,144,361; 6,271,823; 6,225,971; and 6,184,856. Dielectrophoretic displays, which are similar to electrophoretic displays but rely upon variations in electric field strength, can operate in a similar mode; see U.S. Pat. No. 4,418,346. When a DC field is applied to the medium via the electrodes of the device of using a power source and a controller (not shown), the dark or light particles move toward the viewing surface, thereby changing the optical state from dark to light. When an alternating electric field is applied to one of the electrodes, the charged pigment particles are driven to the walls of the capsule, resulting in an aperture through the capsule for the transmission of light, i.e., an open state. In both embodiments, because the solvent is non-polar and comprises charge control agents and/or stabilizers, the optical state (black/white; open/closed) can be maintained for long periods of time (weeks) without the need to maintain the electric field. As a result, the devices may be "switched" only a couple of times a day and consume very little power.

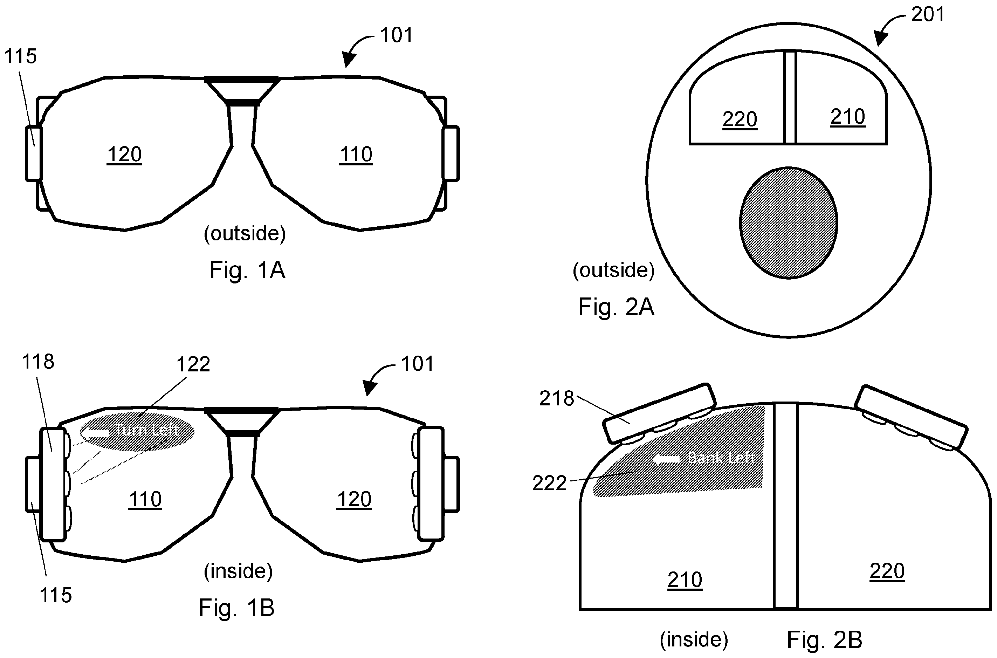

As discussed above, switchable light modulators of the invention provide the ability to have only a portion of a viewing area darken on demand. An important application for such switchable light modulators is augmented reality (AR) and so called heads up displays. A basic design for AR glasses 101 is shown in Figures 1A and 1B. From the outside (i.e., front), as shown in Figure 1A, the AR glasses 101 can be made to look rather typical, including left lens 110, right lens 120, and frame 115. Looking at the inside of the glasses, shown in Figure 1B, the AR glasses 101 may additionally include a miniature short-throw projector, i.e., a near-to-eye projector 118 configured to project messages 122 or images onto the surface of the lens, as shown in Figure 1B. A suitable near-to-eye projector is available from Osram (Sunnyvale, CA). While it is possible to view the message 122 as projected onto a clear surface using, e.g., specialty coatings on the lens surface, the overall viewing experience is improved when the background of the projected message 122 is darkened, as shown in Figure 1B.

In some commercial embodiments, such as Google Glass^{™}, an image is projected onto a separate viewing surface on the exterior surface of the lens, however this limits the useful viewing area to only that of the fixed view surface. Because the viewing surface is in a fixed position, and is more or less optically opaque, a user cannot actually look through the entire viewing surface (i.e., the full lens facing the eye having the external image viewing surface). Additionally, the repeated viewing at close distance in only one portion of the viewing area also leads to eye strain because only one eye is doing almost all of the short-distance focusing. In contrast, as described herein, with the addition of variable transmission and zones (or areas) of different opacity, the projected message 122 can be moved around the viewing area and even overlaid with partial transparency over actual objects in view.

The designs and techniques described herein are not limited to AR glasses, however. As illustrated in Figures 2A and 2B, the same types of light-modulating films can also be incorporated into windscreens for vehicles, such as automobiles, motorcycles, airplanes, helicopters, ships, boats, busses, trains, etc. In Figure 2A the exterior of a jetliner is viewed head-on showing the left portion 210 and the right portion 220 of the windscreen (i.e., cockpit window, i.e., windshield, i.e., canopy). Looking at the inside in Figure 2A, a short range projector 218, e.g., as available from Epson (Los Alamitos, CA) can be used to display information to a user, e.g., a pilot. Similar short-throw methods have been used in airplanes and automobiles by way of "heads-up-displays" for some time, however such heads-up-display systems typically require a separate viewing surface, and the user only has functionality while viewing through that viewing surface. Alternatively, a region of the windscreen may have a special partial reflective coating to improve visibility of projected information, however there is no way to move that region, which can create a blind spot in the windscreen.

Overall, the invention described herein provides light-modulating films that make such short-throw information displays possible on standard optical and window materials while also providing the option to return to "normal" viewing conditions. For example, some embodiments may incorporate the light-modulating films into a lens of glasses. The device can be one active layer of an optical stack comprising other active layers or a light guide. In AR glasses embodiments the devices use two or more light states to selectively regulate the amount of light entering the eye from a scene and as a consequence selectively changes the perceived brightness of a digital image created by the AR glasses. To selectively switch between different levels of light transmission entering the eye from a scene the embodiment layer must be located in the optical stack closer to the scene (or away from the eye of a wearer) than the layer(s) responsible for the formation of the digital image.

In some embodiments, a switchable light modulator has flexible substrates and the completed assembly is sufficiently flexible to conform and bond to the curved surface of a lens. The film device has significant structural strength and compartmentalizes the fluid layer in cavities with each cavity holding a discrete fluid volume that is self-sealed and isolated from adjacent cavities. The structural strength of embodiments derives from the selection of its polymer structure and polymer sealing materials. The structural strength includes that necessary to withstand being permanently laminated to a lens and to having resistance to mechanical shocks and environmental extremes (sunlight and outdoor temperature) in normal use.

Other embodiments for the films include use as a light shutter, a light attenuator, a variable light transmittance sheet, a variable light absorptance sheet, a variable light reflectance sheet, a one-way mirror, transparent openings within a vehicle, or a sunvisor.

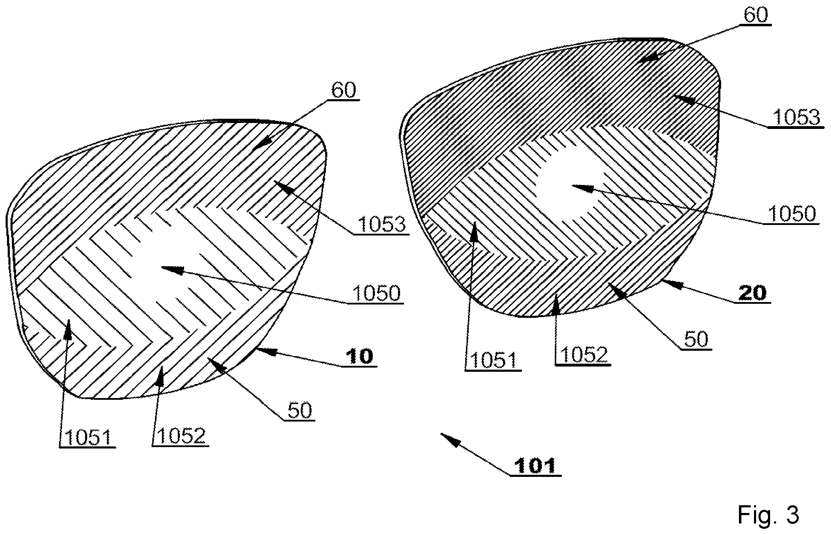

Figure 3 shows an embodiment 101 suitable for use in AR glasses. The device comprises a Left Hand Side (LHS) light modulating film 10 and a Right Hand Side (RHS) film 20. The LHS film (10) is shown in the first light state and the RHS film (20) is in the second light state. Device 101 has four areas having different light transmission ranges. These are indicated by 1050, 1051, 1052, and 1053. In areas 1050 the cavities are 100% by volume filled with transparent solid polymer (60) and there is no (or negligible) fluid. Light transmission is at a maximum and there is no switchable range. The area has the same appearance in the first and second light states as shown by films 10 and 20 respectively. The light transmission of area 1050 can be as high as 90% to 95% in both light states.

In areas 1051 the cavities are 75% filled by volume with transparent solid polymer (60) and 25% by volume with electro-optical fluid (50). The light transmission range favours having a high value for its first light state as shown in film 10 at the expense of the transmission value (and width of switching range) of the second light state shown in film 20. Despite the change in light transmission, the area has a similar appearance in the first and second light states because the eye is relatively insensitive to changes in luminance (i.e. brightness). As an example, the light transmission of area 1051 can be about 80% in its first light state and about 50% in the second light state.

In areas 1052 the cavities are 50% filled by volume with transparent solid polymer (60) and 50% by volume with electro-optical fluid (50). The light transmission range still favours having a high value for its first light state as shown in film 10 at the expense of the transmission value (and width of the switching range) of the second light state shown in film 20, just less so than previously described for area 1051. On switching from the first to the second light state, the change in light transmission will be apparent to the eye of a wearer of the AR glasses as a change in luminance (i.e. brightness) of the scene and a change in the perceived brightness of a digital image created by the AR glasses and located in the field of view corresponding to area 1052. As an example, the light transmission of area 1052 can be about 70% in its first light state and about 30% in the second light state.

In areas 1053 the cavities have nearly zero percentage filled by volume with transparent solid polymer (60) and near 100% by volume with electro-optical fluid (50). The light transmission range favors having a minimum value for its second light state as shown in film 20 (RHS) at the expense of the transmission value of the first light state shown in film 10 (LHS), but overall the dynamic range (ratio of transmission values for the second over the first light states) can be optimum for area 1053. On switching from the first to the second light state, the change in light transmission will be most apparent to the eye of a wearer of the AR glasses as a change in luminance (i.e. brightness) of the scene and a change in the perceived brightness of a digital image created by the AR glasses and located in the field of view corresponding to area 1053. Area 1053 creates the best contrast between the digital image and the scene viewed through the glasses. As an example, the light transmission of area 1053 can be about 60% in its first light state and about 5% in the second light state.

It will be appreciated that any reduction in the amount of light entering the eye from a scene viewed through the AR glasses of embodiments will improve the contrast with the digital image projected or formed in a wearer's field of view. Consequently selecting the second light state in device 101 will improve the contrast of a digital image formed in the field of view of area 1050 even though its light transmission is the same in the first and second light states.

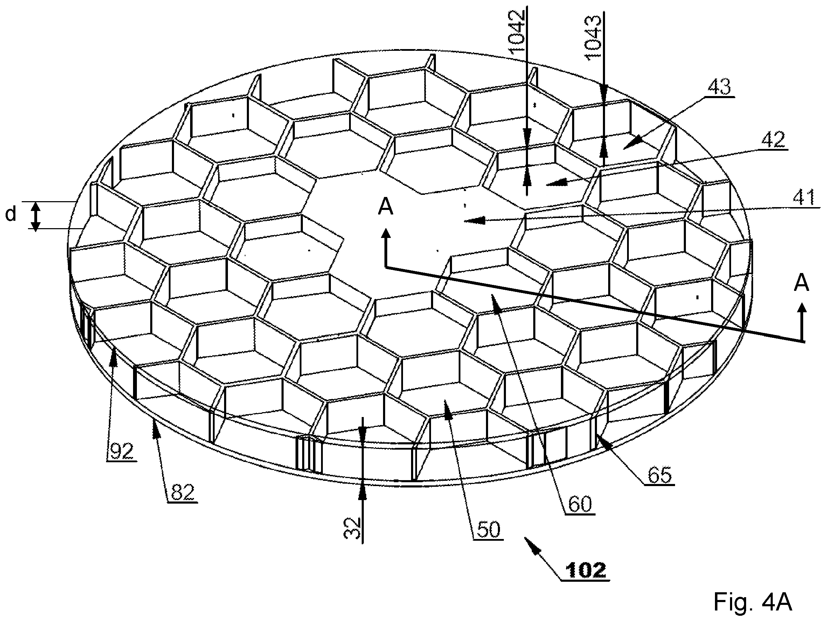

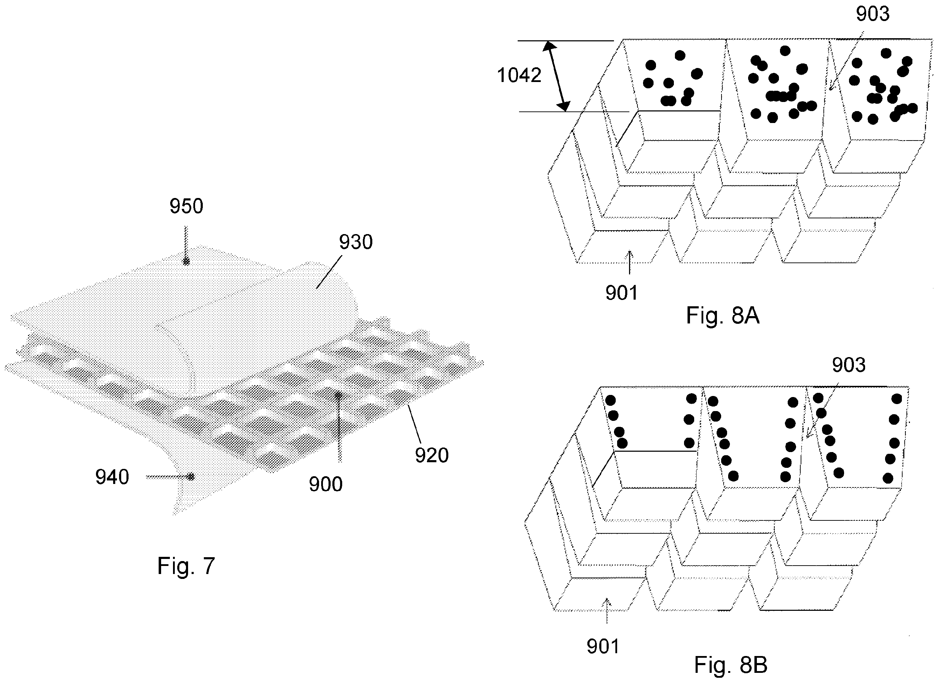

Figure 4A shows embodiment 102 and is a magnified view of a circular cut-out or section of a light modulating film having parallel, juxtaposed bottom and top substrates 82 and 92 respectively. The inner face of both substrates has a transparent electrode layer (not shown separately in Figure 4A; See Figure 7). The electro-optical layer (32) comprises all the elements between the inner faces of the substrates. Its cell gap is the orthogonal distance (d) between the faces. Layer 32 includes the electro-optical fluid 50 and the embossed, transparent, solid polymer 60. Fluid 50 is divided into discrete cavities by wall features 65 in the solid polymer 60, with each cavity having a predefined percentage of its volume filled by transparent solid polymer structure. The percentage is set in an embossing (or moulding) process step on the bottom substrate 82. Consequently, the embossing step, or more correctly the embossing tool surface, determines the subsequent percentage fill by volume for the electro-optical fluid (50).

Figure 4A shows an example of cavities 42 that have about 50% by volume filled with solid polymer structure 60 at the embossing process step. Subsequently in film 102's assembly and fluid laminating step the fluid 50 fills the remaining cavity's volume (50% by volume) and its orthogonal dimension (to the faces of the substrates) in figure 4A is indicated by 1042. Cavities 43 have nearly no solid polymer structure 60. Fluid 50 fills the cavity's volume (100% by volume) and its orthogonal dimension (to the faces of the substrates) in figure 4A is indicated by 1043. Cavities 41 have near 100% by volume filled with solid polymer structure 60 at the embossing process step. The top most surface of the solid polymer within cavities is at the same level as the top of the walls 65. Subsequently in film 102's assembly and fluid laminating step the fluid 50 is expelled by the NIP rollers from the area occupied by cavities 41. Compression force applied by the NIP rollers brings the top most surfaces of the embossed polymer (60) on the bottom substrate (82) into intimate contact with the inner face of the top substrate 92 and squeezes the electro-optical fluid 50 from these contact areas.

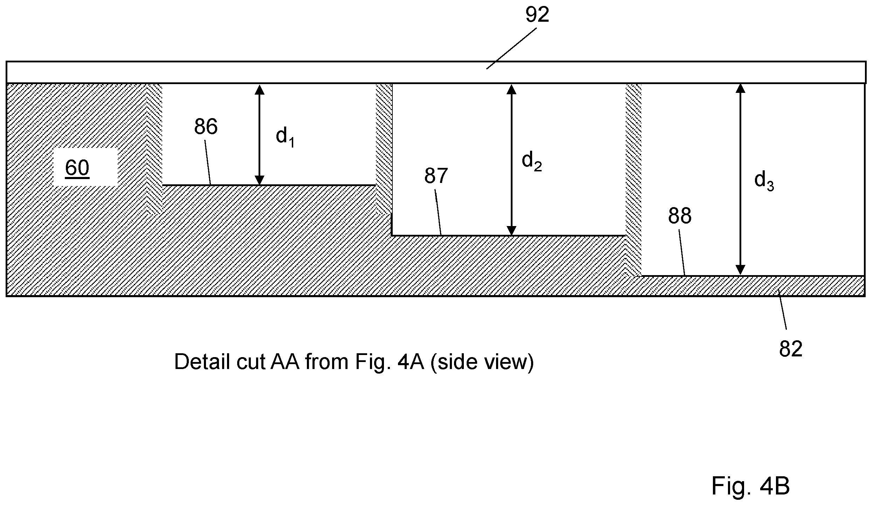

Figure 4A (and embodiment 102) shows how the light modulator 101 of figure 3 is constructed. Cavities 41 are used to define area 1050 in figure 3 (or area 1050 comprises cavities 41); similarly, cavities 42 and area 1052, and, cavities 43 and area 1053. A greater detail of the orthogonal height of successive cavities can be seen in Figure 4B which shows a transverse slice of embodiment 102 along line A-A. As can be seen in Figure 4B, some portions of the embodiment 102 have no electro-optic volume between the bottom substrate 82 and the top substrate 92. As can be seen in Figure 4A, the cavities 43 have varying depths, d₁, d₂, d₃. Of course, more than three different depths are possible. Typically, the orthogonal distance, d, between the top substrate 92 and the top feature 86 of the bottom substrate 82 is less than 100 µm, and in some regions there is no volume between the top substrate 92 and the bottom substrate 82. In some regions, the orthogonal distance, d, between the top substrate 92 and the top feature 86 of the bottom substrate 82 is between 100 µm and 5 µm, e.g., between 80 µm and 10 µm, e.g., between 60 µm and 15 µm, e.g., between 50 µm and 20 µm.

Advantageously in embodiment 101 (see Figure 3) the area with the highest light transmission (1050) is located on the lens face centrally and generally corresponding to where observers of a person wearing AR glasses incorporating embodiment 101 would look through to have eye contact. Similarly, the area with the highest first light state transmission (1051) is located centrally and is defined by a viewer's need (or desire) to have maximum visibility when looking straight ahead (or to the side) at distant objects. The same features can be incorporated into, for example a windshield, in that the central viewing area always provides a clear viewing path, however the areas that will switch transmission state are on the periphery of the viewing area and graduated. In embodiments having either an area 1050 or 1051 the light modulator is advantageously optimized to have a minimum of haze in critical viewing areas.

In contrast, area 1053 in embodiment 101 is not crucial to viewing distant objects in a scene and advantageously it light transmission can be minimized even in the first light state to maximize the contrast with the brightness of digital objects located in this area of a wearer's field of view. Area 1052 is directed towards viewing near objects such as when reading. Digital objects are superimposed on the near objects to add context without requiring a refocusing by the wearer. In many scenarios the brightness of the near objects can be similar to the brightness of the digital objects when indoors and so the first light state transmission for this area 1053 is optimized for these conditions. When outdoors, the second light state can be used to reduce the brightness of near objects in a scene.

In use, the second light state can be used indoors to favor the perception of the digital image and reduce distraction from the internal environment in the wearer's field of view. In use outdoors, the first light state can be used when a digital image is not required, or when the digital image is confined to a local area such as that viewed through 1053.

In Figures 3 and 4A, embodiments 101 and 102 are shown to have perceivable differences in the light transmissions of the different areas 1050, 1051, 1052, and 1053. In preferred embodiments the transition from one area to another is less perceivable because between the two areas a transition area is implemented where the step change in volume percentage between the respective areas (such as 1051 and 1053) is accomplished in graduated step changes over one to five mms, for example. In the transition area the step change in volume percentage from one cavity to another can be 1/10th or less the difference between the respective areas.

In Figure 4A, cavities 41, 42, and 43 are shown as being the same shape (hexagonal) and the same size, however, some embodiments have cavities that are shaped with a degree of randomness such as different sizes, or shapes, or volumes. In embodiments only the orthogonal distance between the inner surfaces of the substrates is the same for all cavities. The top surface of embossed polymer 60 within cavities 42 is shown in Figure 4A as being parallel to the face of the substrates. In other embodiments the polymer 60 within a cavity having a similar volume percentage as cavity 42 (i.e. 50%) is in the form of a non-planar protrusion. In such an embodiment the step change in volume percentage between adjacent or neighboring cavities is implemented by differences in the volume of the respective protrusions. For example, a cavity having a conical shaped protrusion has half the volume percentage of a cavity having a hemispherical shaped protrusion (assuming the same radius and an orthogonal height equal to the radius).

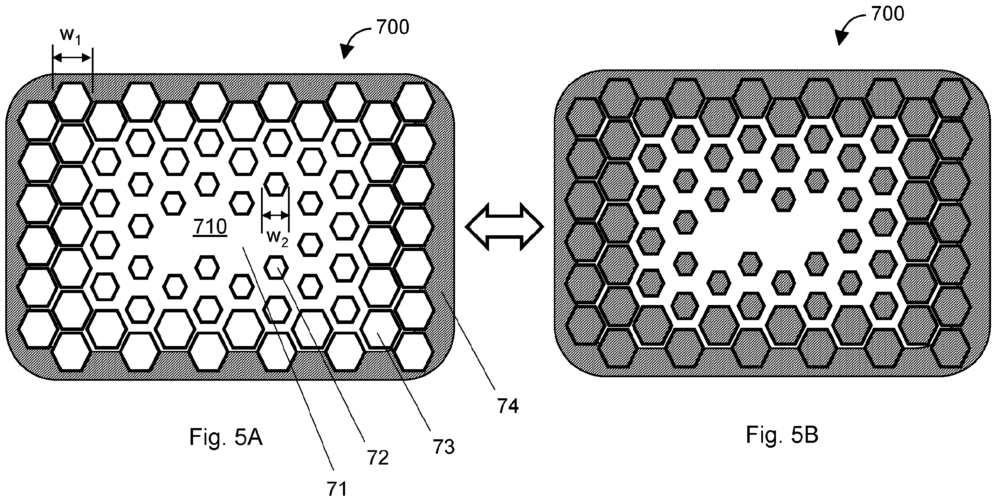

Figures 5A and 5B show an alternative embodiment 700 in which cavities 72 and 73 have varying cross-sectional areas, as defined by open widths w, but all cavities having the same depth. For example, cavity 73 has an open width w₁ whereas cavity 72 has an open width w₂. In some regions, the open width, w, across the well 73/72 is between 500 µm and 25 µm, e.g., between 300 µm and 40 µm, e.g., between 200 µm and 50 µm, e.g., between 150 µm and 60 µm. When the cavities 72 and 73 are filled with electrophoretic media, e.g., as described above, the light modulating device provides varying amounts of opacity across the device when in the dark state. The central region 710 has no cavities and is only the base transparent polymer material, thus when used for AR glasses, the center-viewing field is unobstructed. In some embodiments, the periphery 74 of the device are pre-colored to match the shade of the cavities when they are in the dark state, as shown in Figures 5A and 5B. Because periphery 74 is darker, there is less light leakage when the device is switched to the dark state. The periphery can be colored with, e.g., paint, a colored film, and overlay, etc.

In the embodiment of figures 5A and 5B it may be beneficial to use a variety of concentrations of electrophoretic particles so that the optical density in the closed state varies across the viewing field. For example toward the center of the viewing field the electrophoretic medium may have a lesser pigment loading, whereas toward the periphery the pigment loading is greater. It is additionally possible to use cavities of varying area and depth, i.e., combining the principles exemplified in Figures 4A, 4B, 5A, and 5B. In some instances, if the cavities are sufficiently small and sufficiently close-together, the eye will not notice the different in the optical depth of the electrophoretic medium, but will perceive a gradient of opacity because of the increased amount of light entering between the smaller cavities.

As indicated above, the present invention provides a light-modulating film that includes cavities of bistable electrophoretic fluids. Because the light-modulating film is switchable, it allows a user to intensity of incoming light on demand. Additionally, because the medium is bistable, the light-attenuating state will be stable for some time, e.g., minutes, e.g., hours, e.g., days, e.g., months, without the need to provide additional energy to the light-modulating film.

Furthermore, the invention enables a cost effective fabrication of e a switchable light-modulating film using roll-to-roll processing. Accordingly, it is feasible to produce large sheets of switchable light-modulating film that can be incorporated into devices during other assembly processes. Such films may include an auxiliary optically clear adhesive layer and a release sheet, thereby allowing the light-modulating film to be shipped and distributed as a finished product. The light-modulating film may also be used for after-market light control, for example for conference room windows, exterior windows in buildings, and sunroofs and skylights.

An electrophoretic display normally comprises a layer of electrophoretic material and at least two other layers disposed on opposed sides of the electrophoretic material, one of these two layers being an electrode layer. In most such displays both the layers are electrode layers, and one or both of the electrode layers are patterned to define the pixels of the display. For example, one electrode layer may be patterned into elongate row electrodes and the other into elongate column electrodes running at right angles to the row electrodes, the pixels being defined by the intersections of the row and column electrodes. Alternatively, and more commonly, one electrode layer has the form of a single continuous electrode and the other electrode layer is patterned into a matrix of pixel electrodes, each of which defines one pixel of the display. In some embodiments, two light-transmissive electrode layers are used, thereby allowing light to pass through the electrophoretic display.

The terms "bistable" and "bistability" are used herein in their conventional meaning in the art to refer to displays comprising display elements having first and second display states differing in at least one optical property, and such that after any given element has been driven, by means of an addressing pulse of finite duration, to assume either its first or second display state, after the addressing pulse has terminated, that state will persist for at least several times, for example at least four times, the minimum duration of the addressing pulse required to change the state of the display element.

In order to change the light-modulating properties of the film, the first and second light-transmissive electrode layers may be coupled to a source of an electrical potential. The source may be, e.g., a battery, a power supply, a photovoltaic, or some other source of electrical potential. The source may provide a simple D.C. potential, or it may be configured to provide time-varying voltages, e.g., "waveforms" as described below. The first and second light-transmissive electrode layers may be coupled to the source via electrodes, wires, or traces. In some embodiments, the traces may be interrupted with a switch which may be, e.g., a transistor switch. The electrical potential between the first and second light-transmissive electrode layers is typically at least one volt, for example at least two volts, for example at least five volts, for example at least ten volts, for example at least 15 volts, for example at least 18 volts, for example at least 25 volts, for example at least 30 volts, for example at least 30 volts, for example at least 50 volts.

Because the bistable electrophoretic fluid is bistable, the electrophoretic particles will maintain their distribution without application of an electric field. This feature is well described in E Ink Corporation patents listed herein, but mostly results from having a specific mixture of distributed polymers (e.g., polyisobutylene or polylaurylmethacrylate) in the bistable electrophoretic fluid so that the electrophoretic particles are stabilized via depletion flocculation. Accordingly, in a first state, the electrophoretic particles are stable in a dispersed state, despite no electrical potential being applied between the first and second light-transmissive electrode layers. With the application of a suitable electric potential, the electrophoretic particles move toward the suitably biased electrode layer, creating a light-transmission gradient along the height of the cavities. Once the electrophoretic particles are driven to the desired electrode layer, the source can be decoupled from the electrode layers, turning off the electric potential. However, because of the bistability of the bistable electrophoretic fluid, the electrophoretic particles will remain in the second state of a long period of time, e.g., minutes, e.g., hours, e.g., days. The state of the light-light-modulating film can be reversed by driving the collected electrophoretic particles away from the electrode with a reverse polarity voltage.

The internal phase of the electrophoretic medium includes charged pigment particles in a suspending fluid. The fluids used in the variable transmission media of the present invention will typically be of low dielectric constant (preferably less than 10 and desirably less than 3). Especially preferred solvents include aliphatic hydrocarbons such as heptane, octane, and petroleum distillates such as Isopar ^{®} (Exxon Mobil) or Isane^{®} (Total); terpenes such as limonene, e.g., l-limonene; and aromatic hydrocarbons such as toluene. A particularly preferred solvent is limonene, since it combines a low dielectric constant (2.3) with a relatively high refractive index (1.47). The index of refraction of the internal phase may be modified with the addition of index matching agents such as Cargille^{®} index matching fluids available from Cargille-Sacher Laboratories Inc. (Cedar Grove, NJ). In encapsulated media of the present invention, it is preferred that the refractive index of the dispersion of particles match as closely as possible that of the encapsulating material to reduce haze. This index matching is best achieved (when employing commonly available polymeric encapsulants) when the refractive index of the solvent is close to that of the encapsulant. In most instances, it is beneficial to have an internal phase with an index of refraction between 1.51 and 1.57 at 550nm, preferably about 1.54 at 550 nm.

Charged pigment particles may be of a variety of colors and compositions. Additionally, the charged pigment particles may be functionalized with surface polymers to improve state stability. Such pigments are described in U.S. Patent No. 9,921,451, which is incorporated by reference in its entirety. For example, if the charged particles are of a white color, they may be formed from an inorganic pigment such as TiO2, ZrO2, ZnO, Al2O3, Sb2O3, BaSO4, PbSO4 or the like. They may also be polymer particles with a high refractive index (>1.5) and of a certain size (>100 nm) to exhibit a white color, or composite particles engineered to have a desired index of refraction. Black charged particles, they may be formed from CI pigment black 26 or 28 or the like (e.g., manganese ferrite black spinel or copper chromite black spinel) or carbon black. Other colors (non-white and non-black) may be formed from organic pigments such as CI pigment PR 254, PR122, PR149, PG36, PG58, PG7, PB28, PB15:3, PY83, PY138, PY150, PY155 or PY20. Other examples include Clariant Hostaperm Red D3G 70-EDS, Hostaperm Pink E-EDS, PV fast red D3G, Hostaperm red D3G 70, Hostaperm Blue B2G-EDS, Hostaperm Yellow H4G-EDS, Novoperm Yellow HR-70-EDS, Hostaperm Green GNX, BASF Irgazine red L 3630, Cinquasia Red L 4100 HD, and Irgazin Red L 3660 HD; Sun Chemical phthalocyanine blue, phthalocyanine green, diarylide yellow or diarylide AAOT yellow. Color particles can also be formed from inorganic pigments, such as CI pigment blue 28, CI pigment green 50, CI pigment yellow 227, and the like. The surface of the charged particles may be modified by known techniques based on the charge polarity and charge level of the particles required, as described in U.S. Pat. Nos. 6,822,782, 7,002,728, 9,366,935, and 9,372,380 as well as US Publication No. 2014-0011913, the contents of all of which are incorporated herein by reference in their entirety.

The particles may exhibit a native charge, or they may be charged explicitly using a charge control agent, or may acquire a charge when suspended in a solvent or solvent mixture. Suitable charge control agents are well known in the art; they may be polymeric or non-polymeric in nature or may be ionic or non-ionic. Examples of charge control agent may include, but are not limited to, Solsperse 17000 (active polymeric dispersant), Solsperse 9000 (active polymeric dispersant), OLOA 11000 (succinimide ashless dispersant), Unithox 750 (ethoxylates), Span 85 (sorbitan trioleate), Petronate L (sodium sulfonate), Alcolec LV30 (soy lecithin), Petrostep B100 (petroleum sulfonate) or B70 (barium sulfonate), Aerosol OT, polyisobutylene derivatives or poly(ethylene co-butylene) derivatives, and the like. In addition to the suspending fluid and charged pigment particles, internal phases may include stabilizers, surfactants and charge control agents. A stabilizing material may be adsorbed on the charged pigment particles when they are dispersed in the solvent. This stabilizing material keeps the particles separated from one another so that the variable transmission medium is substantially non-transmissive when the particles are in their dispersed state. As is known in the art, dispersing charged particles (typically a carbon black, as described above) in a solvent of low dielectric constant may be assisted by the use of a surfactant. Such a surfactant typically comprises a polar "head group" and a non-polar "tail group" that is compatible with or soluble in the solvent. In the present invention, it is preferred that the non-polar tail group be a saturated or unsaturated hydrocarbon moiety, or another group that is soluble in hydrocarbon solvents, such as for example a poly(dialkylsiloxane). The polar group may be any polar organic functionality, including ionic materials such as ammonium, sulfonate or phosphonate salts, or acidic or basic groups. Particularly preferred head groups are carboxylic acid or carboxylate groups. Stabilizers suitable for use with the invention include polyisobutylene and polystyrene. In some embodiments, dispersants, such as polyisobutylene succinimide and/or sorbitan trioleate, and/or 2-hexyldecanoic acid are added.

The bistable electrophoretic media of the present invention will typically contain a charge control agent (CCA), and may contain a charge director. These electrophoretic media components typically comprise low molecular weight surfactants, polymeric agents, or blends of one or more components and serve to stabilize or otherwise modify the sign and/or magnitude of the charge on the electrophoretic particles. The CCA is typically a molecule comprising ionic or other polar groupings, hereinafter referred to as head groups. At least one of the positive or negative ionic head groups is preferably attached to a non-polar chain (typically a hydrocarbon chain) that is hereinafter referred to as a tail group. It is thought that the CCA forms reverse micelles in the internal phase and that it is a small population of charged reverse micelles that leads to electrical conductivity in the very non-polar fluids typically used as electrophoretic fluids.

Non-limiting classes of charge control agents that are useful in the media of the present invention include organic sulfates or sulfonates, metal soaps, block or comb copolymers, organic amides, organic zwitterions, and organic phosphates and phosphonates. Useful organic sulfates and sulfonates include, but are not limited to, sodium bis(2-ethylhexyl) sulfosuccinate, calcium dodecylbenzenesulfonate, calcium petroleum sulfonate, neutral or basic barium dinonylnaphthalene sulfonate, neutral or basic calcium dinonylnaphthalene sulfonate, dodecylbenzenesulfonic acid sodium salt, and ammonium lauryl sulfate. Useful metal soaps include, but are not limited to, basic or neutral barium petronate, calcium petronate, cobalt, calcium, copper, manganese, magnesium, nickel, zinc, aluminum and iron salts of carboxylic acids such as naphthenic, octanoic, oleic, palmitic, stearic, and myristic acids and the like. Useful block or comb copolymers include, but are not limited to, AB diblock copolymers of (A) polymers of 2-(N,N-dimethylamino)ethyl methacrylate quaternized with methyl p-toluenesulfonate and (B) poly(2-ethylhexyl methacrylate), and comb graft copolymers with oil soluble tails of poly(12-hydroxystearic acid) and having a molecular weight of about 1800, pendant on an oil-soluble anchor group of poly(methyl methacrylate-methacrylic acid). Useful organic amides/amines include, but are not limited to, polyisobutylene succinimides such as OLOA 371 or 1200 (available from Chevron Oronite Company LLC, Houston, Tex.), or Solsperse 17000 (available from Lubrizol, Wickliffe, OH: Solsperse is a Registered Trade Mark), and N-vinylpyrrolidone polymers. Useful organic zwitterions include, but are not limited to, lecithin. Useful organic phosphates and phosphonates include, but are not limited to, the sodium salts of phosphated mono- and diglycerides with saturated and unsaturated acid substituents. Useful tail groups for CCAinclude polymers of olefins such as poly(isobutylene) of molecular weight in the range of 200 - 10,000. The head groups may be sulfonic, phosphoric or carboxylic acids or amides, or alternatively amino groups such as primary, secondary, tertiary or quaternary ammonium groups.

Charge adjuvants used in the media of the present invention may bias the charge on electrophoretic particle surfaces, as described in more detail below. Such charge adjuvants may be Bronsted or Lewis acids or bases.

Particle dispersion stabilizers may be added to prevent particle flocculation or attachment to the capsule or other walls or surfaces. For the typical high resistivity liquids used as fluids in electrophoretic displays, non-aqueous surfactants may be used. These include, but are not limited to, glycol ethers, acetylenic glycols, alkanolamides, sorbitol derivatives, alkyl amines, quaternary amines, imidazolines, dialkyl oxides, and sulfosuccinates.

As described in U.S. Patent No. 7,170,670, the bistability of electrophoretic media can be improved by including in the fluid a polymer having a number average molecular weight in excess of about 20,000, this polymer being essentially non-absorbing on the electrophoretic particles; poly(isobutylene) is a preferred polymer for this purpose.

In addition, as described in for example, U.S. Patent No. 6,693,620, a particle with immobilized charge on its surface sets up an electrical double layer of opposite charge in a surrounding fluid. Ionic head groups of the CCA may be ion-paired with charged groups on the electrophoretic particle surface, forming a layer of immobilized or partially immobilized charged species. Outside this layer there is a diffuse layer comprising charged (reverse) micelles comprising CCA molecules in the fluid. In conventional DC electrophoresis, an applied electric field exerts a force on the fixed surface charges and an opposite force on the mobile counter-charges, such that slippage occurs within the diffuse layer and the particle moves relative to the fluid. The electric potential at the slip plane is known as the zeta potential.

In the light modulators of the present invention, the transparent state is brought about by field dependent aggregation of the electrophoretic particles; such field dependent aggregation may take the form of dielectrophoretic movement of electrophoretic particles to the lateral walls of a droplet (see Figs. 8A and 8B), or "chaining", i.e., formation of strands of electrophoretic particles within the droplet, or possibly in other ways. Regardless of the exact type of aggregation achieved, such field dependent aggregation of the electrophoretic particles causes the particles to occupy only a small proportion of the viewable area of each droplet, when viewed in a direction perpendicular to the viewing surface through which an observer views the electrophoretic medium. In the light-transmissive or open state, the major part of the viewable area of each droplet is free from electrophoretic particles and light can pass freely therethrough. In contrast, in the non-light-transmissive or closed state, the electrophoretic particles are distributed throughout the whole viewable area of each droplet (the particles may be uniformly distributed throughout the volume of the suspending fluid or concentrated in a layer adjacent one major surface of the electrophoretic layer), so that no light can pass therethrough.

It can be shown by conventional theory that field dependent aggregation/assembly of the electrophoretic particles, and hence the formation of an open state, is promoted by application of high frequency fields (typically at least 10 Hz) to the electrophoretic medium, and by the use of irregularly shaped droplets, highly conductive electrophoretic particles, and a low conductivity, low dielectric constant suspending fluid. Conversely, dispersion of the electrophoretic particles into the suspending fluid or their concentration adjacent one major surface of the electrophoretic layer, and hence the formation of a closed state, is promoted by application of low frequency fields (typically less than 10 Hz) to the electrophoretic medium, and by the use of highly charged electrophoretic particles, higher conductivity, higher dielectric constant suspending fluid, and charged droplet walls.

In other words, to decrease closing time in a dielectrophoretic display (i.e., recovery from dielectrophoretic migration) or a stranding display (i.e., one in which the particles aggregate as in an electrorheological fluid), it is advantageous to vary both the operating voltage and the waveform, using a high frequency, high voltage waveform for opening the modulator and a low frequency, low voltage waveform for closing it. These changes in waveform can be coupled with either patterned electrodes or various conductive particle material, such as doped, metallic or semi-conductive materials, like those described in U.S. Patent 7,327,511, to optimize the response in both directions.

Light modulating films of the invention can be formed using a variety of methods, including embossing, photolithography, or ablation. In one embodiment, the entirety of the stack, e.g., including one or more substrates, can be sealed with an edge seal. The edge seal may include any of the sealing compositions described below. The edge seal may be continuous around the light-light-modulating layer and substrate, or the edge seal may only cover a portion of the stack, e.g., only the outer edge of the light-light-modulating layer. In some embodiments, the edge seal may include an additional protective layer, e.g., a layer that is impermeable to water, e.g., clear polyethylene. The protective layer may provide moisture or gas barrier properties. The edge of the protective layer and or edge seal may be sealed with a thermal or UV curable or thermal activated edge seal material that provides moisture or gas barrier properties. In an embodiment, the edge seal is sandwiched by two protective substrates. In some embodiments, the edge seal will actually incase the entire stack, thereby creating a sealed assembly. While not shown, it is understood that one or more electrical connections may have to traverse the edge seal to provide an electrical connection to the first and second electrodes. Such connections may be provided by a flexible ribbon connector.

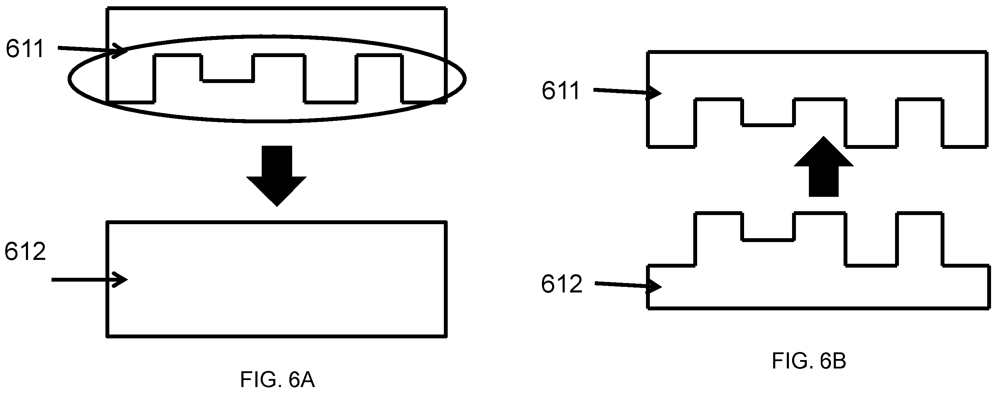

Figures 6A and 6B illustrate the embossing process with an embossing tool (611), with a three-dimensional microstructure (circled) on its surface. As shown in FIGS. 6A and 6B, after the embossing tool (611) is applied to the embossing composition (612) of at least 20 µm thick, e.g., at least 40 µm thick, e.g., at least 50 µm thick, e.g., at least 60 µm thick, e.g., at least 80 µm thick, e.g., at least 100 µm thick, e.g., at least 150 µm, e.g., at least 200 µm thick, e.g., at least 250 µm thick. After the embossing composition is cured (e.g., by radiation), or the hot-embossable material becomes embossed by heat and pressure, the embossed material is released from the embossing tool (see Figure 6B), leaving behind wells (elongated chambers) of the requisite dimensions, e.g., wherein a height of the well is equal to or less than the thickness of the light-modulating layer (embossing composition), and wherein the depth of the well is between 5 µm and 150 µm, and the open width of the chambers is between 50 µm and 5 mm.

Using a conventional embossing tool, the cured or hot embossed material sometimes does not completely release from the tool because of the undesired strong adhesion between cured or hot embossed material and the surface of the embossing tool. In this case, there may be some cured or hot embossed material transferred to, or stuck on, the surface of the embossing tool, leaving an uneven surface on the object formed from the process.

The above-described problems are especially a concern when the cured embossing composition or hot embossed material does not adhere well to certain supporting layers. For example, if the supporting layer is a polymeric layer, the adhesion between the polymeric layer and a cured or hot embossed embossing composition is weak in case one of them is hydrophilic and the other is hydrophobic. Therefore, it is preferred that either both of the embossing composition and the supporting layer are hydrophobic or both are hydrophilic.

Suitable hydrophilic compositions for forming the embossing layer or supporting layer may comprise a polar oligomeric or polymeric material. As described in US Patent No. 7,880,958, such a polar oligomeric or polymeric material may be selected from the group consisting of oligomers or polymers having at least one of the groups such as nitro (-NO₂), hydroxyl (-OH), carboxyl (-COO), alkoxy (-OR wherein R is an alkyl group), halo (e.g., fluoro, chloro, bromo or iodo), cyano (-CN), sulfonate (-SO₃) and the like. The glass transition temperature of the polar polymer material is preferably below about 100°C and more preferably below about 60°C. Specific examples of suitable polar oligomeric or polymeric materials may include, but are not limited to, polyvinyl alcohol, polyacrylic acid, poly(2-hydroxylethyl methacrylate), polyhydroxy functionalized polyester acrylates (such as BDE 1025, Bomar Specialties Co, Winsted, CT) or alkoxylated acrylates, such as ethoxylated nonyl phenol acrylate (e.g., SR504, Sartomer Company), ethoxylated trimethylolpropane triacrylate (e.g., SR9035, Sartomer Company) or ethoxylated pentaerythritol tetraacrylate (e.g., SR494, from Sartomer Company).

The embossing tool (611) may be used directly to emboss the composition (612). More typically, the embossing tool (611) is mounted on a plain drum to allow rotation of the embossing sleeve over the embossing composition (612). The embossing drum or sleeve is usually formed of a conductive material, such as a metal (e.g., aluminum, copper, zinc, nickel, chromium, iron, titanium, cobalt or the like), an alloy derived from any of the aforementioned metals, or stainless steel. Different materials may be used to form a drum or sleeve. For example, the center of the drum or sleeve may be formed of stainless steel and a nickel layer is sandwiched between the stainless steel and the outermost layer, which may be a copper layer.

Examples of components in a composition for forming the light-modulating layer, may include, but are not limited to, thermoplastic or thermoset materials or a precursor thereof, such as multifunctional vinyls including, but not limited to, acrylates, methacrylates, allyls, vinylbenzenes, vinylethers, multifunctional epoxides and oligomers or polymers thereof, and the like. Multifunctional acrylate and oligomers thereof are often used. A combination of a multifunctional epoxide and a multifunctional acrylate is also useful to achieve desirable physico-mechanical properties of the light-modulating layer. A low Tg (glass transition temperature) binder or crosslinkable oligomer imparting flexibility, such as urethane acrylate or polyester acrylate, may also be added to improve the flexure resistance of the embossed privacy layers.

Further examples of compositions for a light-modulating layer may comprise a polar oligomeric or polymeric material. Such a polar oligomeric or polymeric material may be selected from the group consisting of oligomers or polymers having at least one of the groups such as nitro (-NO₂), hydroxyl (-OH), carboxyl (-COO), alkoxy (-OR wherein R is an alkyl group), halo (e.g., fluoro, chloro, bromo or iodo), cyano (-CN), sulfonate (-SO3) and the like. The glass transition temperature of the polar polymer material is preferably below about 100° C, and more preferably below about 60° C. Specific examples of suitable polar oligomeric or polymeric materials may include, but are not limited to, polyhydroxy functionalized polyester acrylates (such as BDE 1025, Bomar Specialties Co, Winsted, Conn.) or alkoxylated acrylates, such as ethoxylated nonyl phenol acrylate (e.g., SR504, Sartomer Company), ethoxylated trimethylolpropane triacrylate (e.g., SR9035, Sartomer Company) or ethoxylated pentaerythritol tetraacrylate (e.g., SR494, from Sartomer Company).

Alternatively, the light-modulating layer composition may comprise (a) at least one difunctional UV curable component, (b) at least one photoinitiator, and (c) at least one mold release agent. Suitable difunctional components may have a molecular weight higher than about 200. Difunctional acrylates are preferred and difunctional acrylates having a urethane or an ethoxylated backbone are particularly preferred. More specifically, suitable difunctional components may include, but are not limited to, diethylene glycol diacrylate (e.g., SR230 from Sartomer), triethylene glycol diacrylate (e.g., SR272 from Sartomer), tetraethylene glycol diacrylate (e.g., SR268 from Sartomer), polyethylene glycol diacrylate (e.g., SR295, SR344 or SR610 from Sartomer), polyethylene glycol dimethacrylate (e.g., SR603, SR644, SR252 or SR740 from Sartomer), ethoxylated bisphenol A diacrylate (e.g., CD9038, SR349, SR601 or SR602 from Sartomer), ethoxylated bisphenol A dimethacrylate (e.g., CD540, CD542, SR101, SR150, SR348, SR480 or SR541 from Sartomer), and urethane diacrylate (e.g., CN959, CN961, CN964, CN965, CN980 or CN981 from Sartomer; Ebecryl 230, Ebecryl 270, Ebecryl 8402, Ebecryl 8804, Ebecryl 8807 or Ebecryl 8808 from Cytec). Suitable photoinitiators may include, but are not limited to, bis-acyl-phosphine oxide, 2-benzyl-2-(dimethylamino)-1-[4-(4-morpholinyl)phenyl]-1-butanone, 2,4,6-trimethylbenzoyl diphenyl phosphine oxide, 2-isopropyl-9H-thioxanthen-9-one, 4-benzoyl-4'-methyldiphenylsulphide and 1-hydroxycyclohexyl-phenyl-ketone, 2-hydroxy-2-methyl-1-phenyl-propan-1-one, 1-[4-(2-hydroxyethoxy)-phenyl]-2-hydroxy-2-methyl-1-propane-1-one, 2,2-dimethoxy-1,2-diphenylethan-1-one or 2-methyl-1[4-(methylthio)phenyl]-2-morpholinopropan-1-one. Suitable mold release agents may include, but are not limited to, organomodified silicone copolymers such as silicone acrylates (e.g., Ebercryl 1360 or Ebercyl 350 from Cytec), silicone polyethers (e.g., Silwet 7200, Silwet 7210, Silwet 7220, Silwet 7230, Silwet 7500, Silwet 7600 or Silwet 7607 from Momentive). The composition may further optionally comprise one or more of the following components, a co-initiator, monofunctional UV curable component, multifunctional UV curable component or stabilizer.

It is to be understood that switchable light modulators can be formed in other ways. In an embodiment illustrated in Figure 7, cavities 900 are fabricated separately and then positioned between transparent electrodes, e.g., as shown in Figure 7. For example, the microcell structure may be fabricated by embossing substrate 920, as described above. Once formed, the microcells are filled with pigment particles, fluid, and polymeric binder. The filled microcells are then sealed with a top substrate 930, or a suitable sealing layer that is then overcoated with a first substrate 930, and the sandwiched cavities 900 are disposed between transparent electrodes 940/950, as depicted in Figure 7. In some instances, the top substrate 930 and the top electrode 950 are integrated into a singular film, such as a commercial PET-ITO, such as is available from Saint Gobain (Courbevoie, France). Other methods of filling the microcells with electrophoretic materials and affixing the electrodes may be used to construct the variable transmission structures of the invention. For example, a first transparent electrode may be adhered to the bottom of the microcells, and a conductive transparent sealing material may be spread over the filled microcells to form a second transparent electrode. In an alternative construction an open honeycomb like structure of walls can be formed and the top and the bottom of the walls can be sealed to create chambers that are filled with electro-optic media.

In some embodiments, a sealing composition may be overcoated after the cavities are filled with the electrophoretic fluid, whereupon the filled cavities are sealed by hardening the sealing composition, for example with UV radiation, or by heat, or moisture. In some embodiments, the sealed elongated cavities are laminated to the second transparent conductive film, which may be pre-coated with an optically clear adhesive layer, which may be a pressure sensitive adhesive, a hot melt adhesive, a heat, moisture, or radiation curable adhesive. [Preferred materials for the optically-clear adhesive include acrylics, styrene-butadiene copolymers, styrene-butadiene-styrene block copolymers, styrene-isoprene-styrene block copolymers, polyvinylbutyal, cellulose acetate butyrate, polyvinylpyrrolidone, polyurethanes, polyamides, ethylene-vinylacetate copolymers, epoxides, multifunctional acrylates, vinyls, vinylethers, and their oligomers, polymers, and copolymers.] The finished sheets of switchable light-modulating film may be cut, e.g., with a knife edge, or with a laser cutter. The cut sheets may be laminated to a substrate, e.g., a lens, using another optically-clear adhesive and a release sheet may be performed on the finished switchable light-modulating film so that the film can be shipped in section sheets or rolls and cut to size when it is to be used, e.g., for incorporation into a display, a window, or other device/substrate.

The motion of the electrophoretic particles between an open and closed state is illustrated in Figure 8A and 8B. As described above, the cavities 901 may be constructed from flexible polymers such as multifunctional acrylates or methacrylates, multifunctional vinylethers, multifunctional epoxides, polyethylene terephthalate (PETE) or other high-density polyethylenes, polypropylene, or modified polyvinyl chloride (PVC). The cavities 901 may be fabricated with embossing, photolithography, contact printing, vacuum forming, or other suitable methods. In this construction, the cavities 901 are sandwiched between a front and back electrodes, made from transparent materials. The charged pigment particles can be driven by an electric field between a closed state (Figure 8A) where the electrophoretic particles 903 are distributed throughout the cavity, and an open state (Figure 8B) where the electrophoretic particles 903 are assembled to increase the free path for light traveling through the cells. The particles can be assembled into clumps or chains, the particles can be driven against the walls of the cavity so that the electrophoretic particles 903 do not block the incident light, or the particles can be collected into capture regions, e.g., in the bottom of the cells (not shown in Figures 8A and 8B). While the cavities 901 are shown as square in Figures 8A and 8B, it is understood that the cavities 901 can be formed to take other shapes, such as hexagons, cones, hemispheres, squares, or other polyhedrons. As shown in Figures 8A and 8B, the cavities 901 may be formed of varying depths, thus the total change in attenuation between the closed (Figure 8A) and open (Figure 8B) states will be less pronounced for the cavities having a shorter depth (1042) and thus having a smaller amount of pigment to look through in the closed state.

## Claims

1. A switchable light modulator comprising:
a first light-transmissive substrate (92);
a second light-transmissive substrate (82) comprising a plurality of features (86, 87, 88), the features (86, 87, 88) being substantially parallel to the first light-transmissive substrate (92), and at least some of the features (86, 87, 88) having different orthogonal distances (d₁, d₂, d₃) between the features (86, 87, 88) and the first light-transmissive substrate (92);
a plurality of walls (65) disposed between the first light-transmissive substrate (92) and the second light-transmissive substrate (82), thus creating a plurality of chambers, wherein each feature of the plurality of features (86, 87, 88) defines a floor of a respective chamber, such that at least some of the chambers have different depths (d₁, d₂, d₃);
an electro-optic medium disposed within the plurality of chambers;
a first electrode (950) coupled to the first light-transmissive substrate (92); and
a second electrode (940) coupled to the second light-transmissive substrate, wherein
the switchable light modulator is configured such that application of a driving voltage between the first and second electrodes (950, 940) causes the electro-optic medium to switch between a first light-absorbing state and a second light-transmissive state.

2. The switchable light modulator of claim 1, wherein the electro-optic medium comprises charged pigment particles (903) dispersed in a non-polar solvent and the electro-optic medium switches between a first light-absorbing state and a second light-transmissive state by moving between a distributed particle state and an assembled particle state.

3. The switchable light modulator of claim 2, wherein the electro-optic medium is bistable.

4. The switchable light modulator of claim 1, wherein the first light transmissive substrate (92, 930) or the second light transmissive substrate (82) comprise polymers including acrylate, methacrylate, vinylbenzene, vinylether, or multifunctional epoxides.

5. The switchable light modulator of claim 1, wherein at least a portion of the second light-transmissive substrate (82) contacts the first light-transmissive substrate (92).

6. The switchable light modulator of claim 1, wherein the orthogonal distance between at least some of the features of the second light-transmissive substrate (82) and the first light-transmissive substrate (92) is at least 60 µm or greater.

7. The switchable light modulator of claim 6, wherein the orthogonal distance between at least some of the features of the second light-transmissive substrate (82) and the first light-transmissive substrate (92) is less than 60 µm.

8. A windshield (210, 220), window, glasses (101), googles, or visor including the switchable light modulator of claim 1.

9. An information display system comprising a transparent substrate, the switchable light modulator of claim 1, and a projector (118, 218) configured to project information on the switchable light modulator.

10. The information display system of claim 9, wherein the projector (118, 218) is a near-to-eye projector (118).

11. A switchable light modulator comprising:
a first light-transmissive substrate (92);
a second light-transmissive substrate (82) comprising a plurality of wells (72, 73), the wells (72, 73) having walls and a floor and creating a plurality of chambers when coupled to the first light-transmissive substrate (92), wherein the wells have an open width, and at least some of the wells have an open width that is less than half as wide as other wells;
an electro-optic medium disposed within the plurality of chambers;
a first electrode (950) coupled to the first light-transmissive substrate (92); and
a second electrode (940) coupled to the second light-transmissive substrate (82), wherein
the switchable light modulator is configured such that the application of a driving voltage between the first and second electrodes (950, 940) causes the electro-optic medium to switch between a first light-absorbing state and a second light-transmissive state;
wherein at least a portion of the second light-transmissive substrate (82) contacts the first light-transmissive substrate (92) such that the portion of the second light-transmissive substrate (82) comprises no wells; and
wherein the open widths of the plurality of wells (72, 73) are configured to provide varying opacity across the switchable light modulator when in the first light-absorbing state.

12. The switchable light modulator of claim 11, wherein the electro-optic medium comprises charged pigment particles (903) dispersed in a non-polar solvent and the electro-optic medium switches between a first light-absorbing state and a second light-transmissive state by moving between a distributed particle state and an assembled particle state.

13. The switchable light modulator of claim 12, wherein the electro-optic medium is bistable.

14. The switchable light modulator of claim 11, wherein the first light transmissive substrate (92) or the second light transmissive substrate (82) comprise polymers including acrylate, methacrylate, vinylbenzene, vinylether, or multifunctional epoxides.

## Patentansprüche

1. Schaltbarer Lichtmodulator, der Folgendes umfasst:
ein erstes lichtdurchlässiges Substrat (92);
ein zweites lichtdurchlässiges Substrat (82), das mehrere Merkmale (86, 87, 88) umfasst, wobei die Merkmale (86, 87, 88) im Wesentlichen parallel zu dem ersten lichtdurchlässigen Substrat (92) sind und zumindest einige der Merkmale (86, 87, 88) unterschiedliche orthogonale Abstände (d₁, d₂, d₃) zwischen den Merkmalen (86, 87, 88) und dem ersten lichtdurchlässigen Substrat (92) aufweisen;
mehrere Wände (65), die zwischen dem ersten lichtdurchlässigen Substrat (92) und dem zweiten lichtdurchlässigen Substrat (82) angeordnet sind, wodurch mehrere Kammern erzeugt werden, wobei jedes Merkmal der mehreren Merkmale (86, 87, 88) einen Boden einer jeweiligen Kammer definiert, so dass zumindest einige der Kammern unterschiedliche Tiefen (d₁, d₂, d₃) aufweisen;
ein elektrooptisches Medium, das innerhalb der mehreren Kammern angeordnet ist;
eine erste Elektrode (950), die mit dem ersten lichtdurchlässigen Substrat (92) gekoppelt ist; und
eine zweite Elektrode (940), die mit dem zweiten lichtdurchlässigen Substrat gekoppelt ist, wobei der schaltbare Lichtmodulator so ausgestaltet ist, dass das Anlegen einer Steuerspannung zwischen der ersten und der zweiten Elektrode (950, 940) bewirkt, dass das elektrooptische Medium zwischen einem ersten lichtabsorbierenden Zustand und einem zweiten lichtdurchlässigen Zustand umschaltet.

2. Schaltbarer Lichtmodulator nach Anspruch 1, wobei das elektrooptische Medium geladene Pigmentteilchen (903) umfasst, die in einem unpolaren Lösungsmittel dispergiert sind, und das elektrooptische Medium zwischen einem ersten lichtabsorbierenden Zustand und einem zweiten lichtdurchlässigen Zustand umschaltet, indem es sich zwischen einem Zustand mit verteilten Teilchen und einem Zustand mit organisierten Teilchen bewegt.

3. Schaltbarer Lichtmodulator nach Anspruch 2, wobei das elektrooptische Medium bistabil ist.

4. Schaltbarer Lichtmodulator nach Anspruch 1, wobei das erste lichtdurchlässige Substrat (92, 930) oder das zweite lichtdurchlässige Substrat (82) Polymere umfassen, die Acrylat, Methacrylat, Vinylbenzen, Vinylether oder multifunktionelle Epoxide umfassen.

5. Schaltbarer Lichtmodulator nach Anspruch 1, wobei zumindest ein Teil des zweiten lichtdurchlässigen Substrats (82) mit dem ersten lichtdurchlässige Substrat (92) in Kontakt steht.

6. Schaltbarer Lichtmodulator nach Anspruch 1, wobei der orthogonale Abstand zwischen zumindest einigen der Merkmale des zweiten lichtdurchlässigen Substrats (82) und des ersten lichtdurchlässigen Substrats (92) mindestens 60 µm oder mehr beträgt.

7. Schaltbarer Lichtmodulator nach Anspruch 6, wobei der orthogonale Abstand zwischen zumindest einigen der Merkmale des zweiten lichtdurchlässigen Substrats (82) und des ersten lichtdurchlässigen Substrats (92) weniger als 60 µm beträgt.

8. Windschutzscheibe (210, 220), Fenster, Brille (101), Schutzbrille oder Visier, umfassend den schaltbaren Lichtmodulator nach Anspruch 1.

9. Informationsanzeigesystem, das ein transparentes Substrat, den schaltbaren Lichtmodulator nach Anspruch 1 und einen Projektor (118, 218) umfasst, der dazu ausgestaltet ist, Informationen über den schaltbaren Lichtmodulator zu projizieren.

10. Informationsanzeigesystem nach Anspruch 9, wobei der Projektor (118, 218) ein augennaher Projektor (118) ist.

11. Schaltbarer Lichtmodulator, der Folgendes umfasst:
ein erstes lichtdurchlässiges Substrat (92);
ein zweites lichtdurchlässiges Substrat (82), das mehrere Vertiefungen (72, 73) umfasst, wobei die Vertiefungen (72, 73) Wände und einen Boden aufweisen und mehrere Kammern erzeugen, wenn sie mit dem ersten lichtdurchlässigen Substrat (92) gekoppelt sind, wobei die Vertiefungen eine offene Breite aufweisen und zumindest einige der Vertiefungen eine offene Breite aufweisen, die weniger als die Hälfte der Breite anderer Vertiefungen beträgt;
ein elektrooptisches Medium, das innerhalb der mehreren Kammern angeordnet ist;
eine erste Elektrode (950), die mit dem ersten lichtdurchlässigen Substrat (92) gekoppelt ist; und
eine zweite Elektrode (940), die mit dem zweiten lichtdurchlässigen Substrat (82) gekoppelt ist, wobei der schaltbare Lichtmodulator so ausgestaltet ist, dass ein Anlegen einer Steuerspannung zwischen der ersten und der zweiten Elektrode (950, 940) bewirkt, dass das elektrooptische Medium zwischen einem ersten lichtabsorbierenden Zustand und einem zweiten lichtdurchlässigen Zustand umschaltet;
wobei zumindest ein Teil des zweiten lichtdurchlässigen Substrats (82) mit dem ersten lichtdurchlässigen Substrat (92) in Kontakt steht, so dass der Teil des zweiten lichtdurchlässigen Substrats (82) keine Vertiefungen umfasst; und
wobei die offenen Breiten der mehreren Vertiefungen (72, 73) dazu ausgestaltet sind, eine variierende Lichtundurchlässigkeit über den schaltbaren Lichtmodulator hinweg bereitzustellen, wenn sie sich in dem ersten lichtabsorbierenden Zustand befinden.

12. Schaltbarer Lichtmodulator nach Anspruch 11, wobei das elektrooptische Medium geladene Pigmentteilchen (903) umfasst, die in einem unpolaren Lösungsmittel dispergiert sind, und das elektrooptische Medium zwischen einem ersten lichtabsorbierenden Zustand und einem zweiten lichtdurchlässigen Zustand umschaltet, indem es sich zwischen einem Zustand mit verteilten Teilchen und einem Zustand mit organisierten Teilchen bewegt.

13. Schaltbarer Lichtmodulator nach Anspruch 12, wobei das elektrooptische Medium bistabil ist.

14. Schaltbarer Lichtmodulator nach Anspruch 11, wobei das erste lichtdurchlässige Substrat (92) oder das zweite lichtdurchlässige Substrat (82) Polymere umfassen, die Acrylat, Methacrylat, Vinylbenzen, Vinylether oder multifunktionelle Epoxide umfassen.

## Revendications

1. Modulateur de lumière commutable comprenant :
un premier substrat (92) transmettant la lumière ;
un second substrat (82) transmettant la lumière comprenant une pluralité de détails (86, 87, 88), les détails (86, 87, 88) étant sensiblement parallèles au premier substrat (92) transmettant la lumière, au moins certains des détails (86, 87, 88) présentant des distances orthogonales (d₁, d₂, d₃) différentes entre les détails (86, 87, 88) et le premier substrat (92) transmettant la lumière ;
une pluralité de parois (65) disposées entre le premier substrat (92) transmettant la lumière et le second substrat (82) transmettant la lumière, créant ainsi une pluralité de chambres, chaque détail de la pluralité de détails (86, 87, 88) définissant un plancher d'une chambre respective, de sorte qu'au moins certaines des chambres aient des profondeurs différentes (d₁, d₂, d₃) ; un milieu électro-optique disposé dans la pluralité de chambres ;
une première électrode (950) couplée au premier substrat (92) transmettant la lumière ; et
une seconde électrode (940) couplée au second substrat transmettant la lumière, le modulateur de lumière commutable étant configuré de telle sorte que l'application d'une tension de commande entre les première et seconde électrodes (950, 940) amène le milieu électro-optique à commuter entre un premier état absorbant la lumière et un second état transmettant la lumière.

2. Modulateur de lumière commutable selon la revendication 1, le milieu électro-optique comprenant des particules (903) de pigment chargées dispersées dans un solvant non polaire et le milieu électro-optique commutant entre un premier état absorbant la lumière et un second état transmettant la lumière en changeant entre un état particulaire distribué et un état particulaire assemblé.

3. Modulateur de lumière commutable selon la revendication 2, le milieu électro-optique étant bistable.

4. Modulateur de lumière commutable selon la revendication 1, dans lequel le premier substrat (92, 930) transmettant la lumière ou le second substrat (82) transmettant la lumière comprennent des polymères incluant un acrylate, un méthacrylate, un vinylbenzène, un éther vinylique ou des époxydes multifonctionnels.

5. Modulateur de lumière commutable selon la revendication 1, dans lequel au moins une partie du second substrat (82) transmettant la lumière est en contact avec le premier substrat (92) transmettant la lumière.

6. Modulateur de lumière commutable selon la revendication 1, dans lequel la distance orthogonale entre au moins certains des détails du second substrat (82) transmettant la lumière et du premier substrat (92) transmettant la lumière est d'au moins 60 µm ou supérieure.

7. Modulateur de lumière commutable selon la revendication 6, dans lequel la distance orthogonale entre au moins certains des détails du second substrat (82) transmettant la lumière et du premier substrat (92) transmettant la lumière est inférieure à 60 µm.

8. Pare-brise (210, 220), fenêtre, verres optiques (101), lunettes ou visière comprenant le modulateur de lumière commutable selon la revendication 1.

9. Système d'affichage d'informations comprenant un substrat transparent, le modulateur de lumière commutable selon la revendication 1, et un projecteur (118, 218) configuré pour projeter des informations sur le modulateur de lumière commutable.

10. Système d'affichage d'informations selon la revendication 9, le projecteur (118, 218) étant un projecteur (118) proche de l'œil.

11. Modulateur de lumière commutable comprenant :
un premier substrat (92) transmettant la lumière ;
un second substrat (82) transmettant la lumière comprenant une pluralité de puits (72, 73), les puits (72, 73) ayant des parois et un plancher et créant une pluralité de chambres lorsqu'ils sont couplés au premier substrat (92) transmettant la lumière, les puits ayant une largeur ouverte, et au moins certains des puits ayant une largeur ouverte inférieure à la moitié de la largeur des autres puits ;
un milieu électro-optique disposé dans la pluralité de chambres ;
une première électrode (950) couplée au premier substrat (92) transmettant la lumière ; et
une seconde électrode (940) couplée au second substrat (82) transmettant la lumière, le modulateur de lumière commutable étant configuré de telle sorte que l'application d'une tension de commande entre les première et seconde électrodes (950, 940) amène le milieu électro-optique à commuter entre un premier état absorbant la lumière et un second état transmettant la lumière ;
dans lequel au moins une partie du second substrat (82) transmettant la lumière est en contact avec le premier substrat (92) transmettant la lumière de telle sorte que la partie du second substrat (82) transmettant la lumière ne comprenne aucun puits ; et
les largeurs ouvertes de la pluralité de puits (72, 73) étant configurées pour fournir une opacité variable à travers le modulateur de lumière commutable lorsqu'il est dans le premier état absorbant la lumière.

12. Modulateur de lumière commutable selon la revendication 11, le milieu électro-optique comprenant des particules (903) de pigment chargées dispersées dans un solvant non polaire et le milieu électro-optique commutant entre un premier état absorbant la lumière et un second état transmettant la lumière en changeant entre un état particulaire distribué et un état particulaire assemblé.

13. Modulateur de lumière commutable selon la revendication 12, le milieu électro-optique étant bistable.

14. Modulateur de lumière commutable selon la revendication 11, dans lequel le premier substrat (92) transmettant la lumière ou le second substrat (82) transmettant la lumière comprennent des polymères comprenant un acrylate, un méthacrylate, un vinylbenzène, un éther vinylique ou des époxydes multifonctionnels.
